# EUROPEAN PATENT APPLICATION

(11) **EP 4 080 726 A1**
(43) Date of publication of application: **26.10.2022**
(21) Application number: 21382344.6
(22) Date of filing: 21.04.2021
(51) Int. Cl.: H02J 50/00, H02J 50/10, H02J 50/80, H05B 6/12, H04L 12/28

(54) **ELECTROMAGNETIC POWER SUPPLY AND/OR CHARGING HOME MODULE FOR WIRELESS APPLIANCES AND ELECTRONIC DEVICES**

(71) Applicant: Cloen Europa, s.l., 46930 Quart de Poblet (VA) (ES)
(72) Inventor: Cerra Quintana, Pablo Esteban, 46004 Valencia (ES)

(57) **Abstract**

A built-in home automation module, on top or under countertop, fixed to its underside with the help of a metal coupling, which constitutes an induction cooker or a charging element and/or inductive power supply for electronic elements that in turn include a receiving coil, characterized in the module incorporates a power source connected to an emitting inductor coil (1), and comprises a microcontroller and tactile communication interface (4) for interaction with the user.

## Description

### FIELD OF THE INVENTION

The present invention refers to a modular device that, either plugged in or plugged in and installed under any support plane such as the kitchen countertop, a desk, living room furniture or furniture in general, converts the upper part of the module or mentioned plane in a power and/or supply point for electrical appliances and electronic or lighting devices without the need for any wires, as well as an induction hub for kitchenware and controls the intensity of the power and/or load point as well as its activation and shutdown either by a buttonery present in the module or by an external device.

### BACKGROUND ART

The effect of electromagnetic induction generated by an inductive electric coiled body through which a variable current circulates is well known and due to this, a magnetic field is generated that when another electromagnetic coiled piece is next to it generates another variable current and analogous to that of the inductor coil in this second receiving coil.

And, above all because of the lack of efficiency, this effect is used, commonly for charging batteries for low-energy consumption electronic products, in contact with the base that incorporates the inductor or emitter coil.

In recent times, due to the proliferation of electric vehicles, the questioned efficiency of electromagnetic induction has evolved to reduce energy loss to a minimum, although in general, this technology is almost always used in combination with batteries that allow the autonomy of the device used in question.

However, it is not so common, neither in the home field nor in the industrial field, both simple power, without batteries, nor the use in devices electrical appliances and electronics with higher energy consumption, above all because the state of the art did not allow acceptable returns in such cases.

In addition, combined with an endless number of wireless communication technologies such as bluetooth technology, WIFI, NFC (Near Field Communication) or radio control, it allows controlling the aforementioned module, not only remotely, but also allowing them to be combined with other intercommunicating sensors , and implement automations that allow the user to establish routines such as the automatic switch-on of lights when it gets dark, the automatic switch-on of the coffee maker at a specific time, with an external programmer and its alarms, which allow saving time and make the lives of their users more comfortable and easy, either through a central home control interface, with a mobile phone or electronic tablet that can be combined even with their virtual assistants with voice activation, and even with external commercial models of virtual assistants with voice activation and interaction as possible control devices.

### DISCLOSURE OF THE INVENTION

The present invention consists of an electrical module that includes an inductor coil (1), which when anchored either to the lower part of a work or support plane (kitchen counter, desk, shelf) or on the upper part of said plane and connecting it to the electrical network generates a power supplier and/or charging point for a wide ecosystem of electrical home appliances and electronic or lighting devices that incorporate a coil (1) that allows them electromagnetic power supply, and that if they also include a battery (3), allow it to be charged, moreover, with an intelligent management of that battery, designed for sporadic uses, you can convert these appliances not only into elements without wires, but they can be used anywhere else, once the batteries are charged present in such devices if they include them. This could make it possible to use different devices at the same time, with a single charging and/or power supply point, and only need that point to recharge the batteries of the appliances prior to use, which in case of not having power, they could continue being used on the charging and/or feeding point.

In the case that it is installed on a plane, this module can include the kitchen function induction, and work with any element of the cookware suitable for induction cookers, since the principle of operation is exactly the same, but by replacing the winding (1) of the electrical appliances with the ferromagnetic material (2) enough the energy transmission is converted into heat energy.

This device can be controlled either with the buttonery (4) present in the upper plane of the module, or with an app interface, in case of being controlled by a smart device such as a mobile phone or a tablet, can be switched on or off, and therefore it can be activated by its virtual voice activation assistants and therefore the wireless appliance or appliances that at that moment are positioned on the power supply and/or charging point, since a single module allows to power one or more electrical appliances or devices, as long as the power of the emitter module is greater than the amount of the power of the electrical appliances powered. But it can also be controlled with a home automation control device or a remote control by incorporating a radio receiver into the module that receives the interactions collected in these. In addition, an NFC (Near Field Communication) mechanism can be included in the module and the device that simply by bringing the appliance or device closer to the charging/power supply point, converts its control elements into the one that activates or deactivates the module. charging and/or feeding. By a commercial external virtual assistant that allows control and interaction with the devices, if they incorporate a battery, through the voice control that they incorporate and/or with the module for charging and/or feeding the aforementioned devices.

The app interface can not only allow its activation or shutdown from the domestic environment combined with bluetooth technology, but also the possibility of its remote control with WIFI technology and the possibility of combining this control with automatisms and/or combined with others sensors and/or applications of the intelligent control device. As well as its power intensity to adapt to different electrical appliances and electronic or lighting devices, which have different power necessities without damaging this appliance or device. In this same case, it is found, if instead of controlling the device with a smart app, it was done with a home automation control, designed for this purpose.

Specifically, the inductor coil and receiving coil system designed for that device allow an efficiency of 90% of the energy transmitted from one body to the other and with a field of action of 10 cm in the horizontal plane and 3 cm in the vertical plane, It is this distance of 3 cm in the upper plane, which allows us to install the module under a work plane for power supply and/or charging.

Specifically, the module can be combined with the entire ecosystem of household appliances and devices, not only in the kitchen, preferably those employed on a work surface such as electric pots, blenders, kettles, coffee makers among others, if not with others from the rest of the home such as desktop lighting, televisions, hi-fi and sound devices, or for work devices such as desktop computers, laptops, computer screens among many others. In short, any device or household appliance that includes an electromagnetic coil, with or without a battery, pluggable in an autonomous way or not, that allows the charging and / or powering of said object.

### BRIEF DESCRIPTION OF THE DRAWINGS

With the intention of supporting the explanations and concepts that comprise this utility model, the following graphic elements have been generated:
- **FIGURE 1****.-** Where you can see the module with its structure, upper glass, interior coil (1) that will finally generate the load and/or power supply or induction cooker hub depending on the characteristics of the element with which it interacts. This module is designed to be installed on a plane, embedded in it with a hole on the plane or with the help of a support, installed under a plane less than 19 mm thick to generate a charging point and/or power supply without wires.

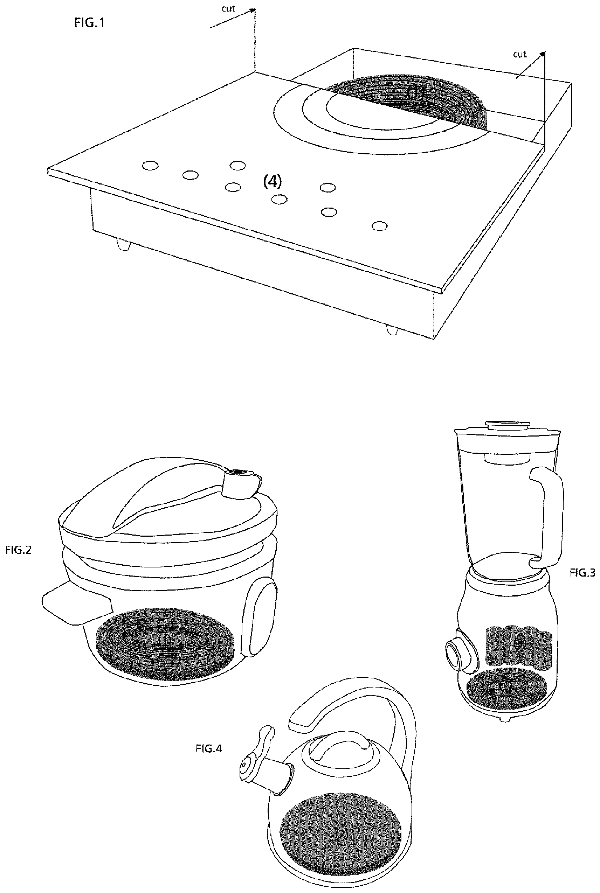

- **FIGURES 2, 3 and 4****.-** Where the three types of systems that can interact with said module are shown, in Figure 2 we see an electrical appliance that integrates a coil (1) which allows it to feed directly without a wire by placing it on the module or on the charging and/or power supply point. In Figure 3, we see the case in which the household appliance includes, in addition to the coil (1) necessary to generate the electromagnetic field, some batteries (3), which would allow it, with a previous load, an autonomous functioning, without the need to be positioned on the module. In both cases, that of Figure 2 and Figure 3, does not exclude the possibility of a wire feed as well.
   Figure 4 shows the third element capable of interacting with the module, and it is an element that integrates a ferromagnetic material (2) in the base to generate heat energy through induction.
- **FIGURE 5****.-** It is the element that allows the module to be installed in the lower part of any module, it allows it to be installed either on a drillable surface, whether said through hole or not, by means of screws with the 6 holes present in the upper plane of the element. The holes in the lower plane are to fix the coupling to the module. If the surface is not pierceable, the upper flange would be used with double-sided tape and silicone, previously fix the coupling, to later integrate the module and fix it.
- **FIGURE 6****.-** There appear, and never in a restrictive way, examples of kitchen appliances with which the module could interact, either for charging and/or direct feeding

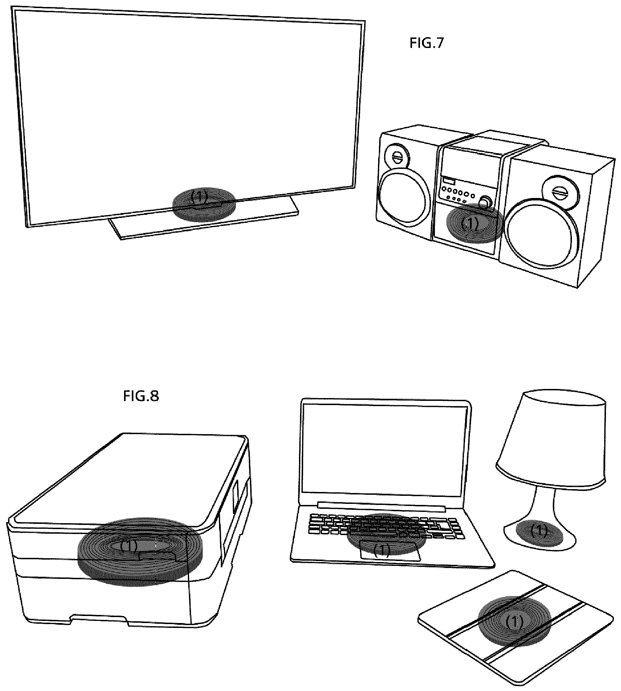

- **FIGURE 7****.-** Appliances normally appear in the living room, never in a restrictive way, but as an example of application on a plane, embedded or under it.
- **FIGURE 8****.-** Electrical appliances or lighting elements present in an office or study appear, in a descriptive way, never restrictive to emphasize that said module would ultimately constitute an ecosystem of wireless elements.
- **FIGURE 9****.-** Elements typical of a kitchenware appear, in a descriptive way, never restrictive, to clarify the possible interactions of the module with elements with bases with ferromagnetic material that transform the energy of the module into heat energy to cook or heat some liquid or other item.
- **FIGURE 10****.-** Electrical diagram according to the specifications of the preferred embodiment of the invention.

### PREFERRED EMBODIMENT OF THE INVENTION

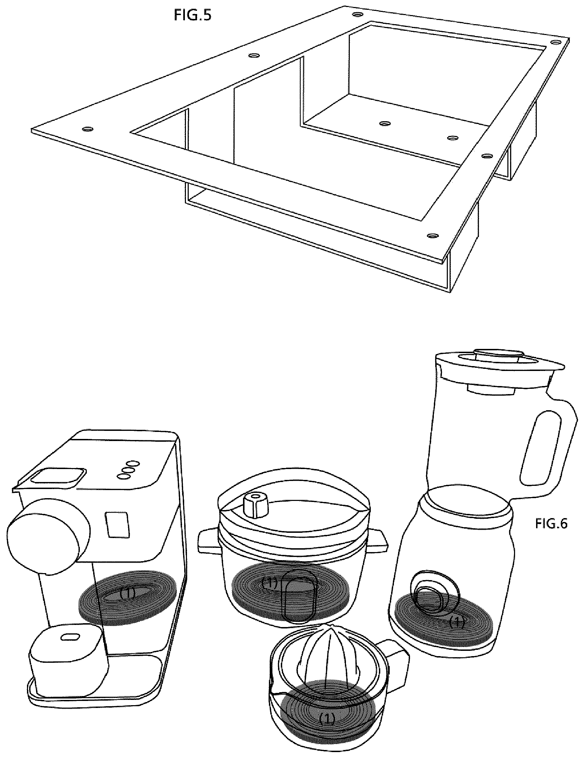

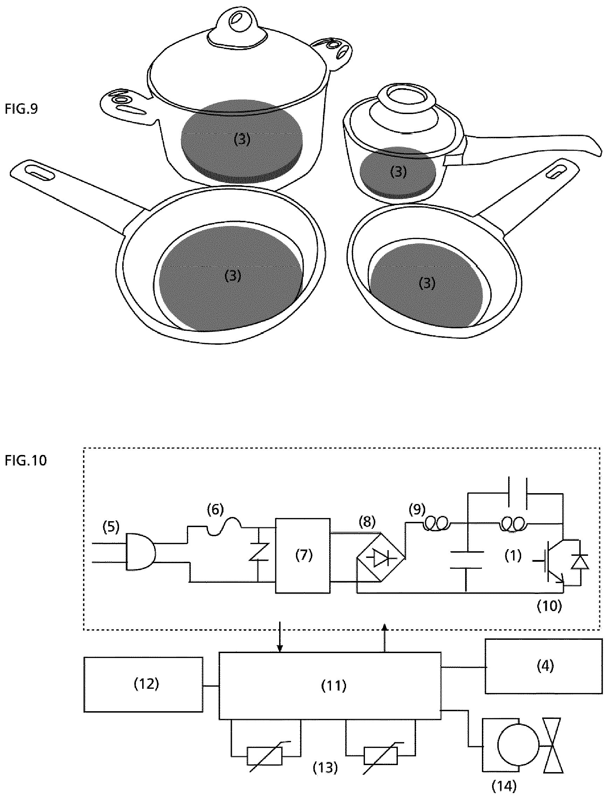

The module, regardless of the different ways of interacting with the user, and whether it is installed on a plane, under a plane or embedded in it, responds to the scheme set out in Figure 10, with a power of 2000W, with no lower efficiency to 80% in the case of loading and/or inductive power supply. Where the different elements that incorporate the module with the transmitter coil as the main element are shown, as well as the microprocessor to configure the different ways of interaction and action, since the needs if it acts as a feeder and/or charger or as an induction cooker are different. And a touch panel, lockable, to use when the module is in sight. Another substantial difference is the mode of use of induction, especially when using it under any plane, with the coupling element present in Figure 5, since it eliminates any wire from view. The plane must be less than or equal to 19mm thick to allow both the detection of the appliance and its efficient operation. In the latter case, the module loses its induction cooker functionality and control of the device becomes remote. In short, it is a modular element that can interact with any electrical element, as long as it is designed for charging and/or inductive power supply, present in the home and defining a broad ecosystem.

As can be seen in the diagram reflected in Figure 10, it is an element that requires connection to the electrical network (5), connected to a fuse (6), with a filter to attenuate the noise of the network (7), a rectifier (8) to adapt the electrical signal, an inductor (9) to maintain the current connected to the coil (1), in this case emitter, an IGBT transistor as a switch (10). This entire scheme, controlled by a microcontroller (11), which communicates with a buttonery (4) or with an electrical communication module (12) of the aforementioned to remotely control it and with NTC Thermistor sensors (13) of temperature to control the emission of the coil and a fan (14) to control the temperature of the assembly mainly of the microcontroller.

## Claims

1. A built-in home automation module, on top or under counter, fixed to its underside with the help of a metal coupling, which constitutes an induction cooker or a charging element and/or inductive power supply for electronic elements that in turn include a receiving coil, **characterized in that** said module incorporates a power source connected to an emitting inductor coil, and comprises a microcontroller and tactile communication buttonery for interaction with the user.

2. A module according to claim 1 that incorporates a bluetooth module for communication with mobile phones or smart tablets or a home automation control panel with built-in sensors that allows automatic interaction through an application.

3. A module according to claim 1 that incorporates a WIFI module for connection to a local area network and its communication with mobile phones or smart tablets connected to this same or another network for its connection and automatic interaction with it through an application .

4. A module according to claim 1 that incorporates an NFC (Near Field Communication) sensor that allows activating the module simply by placing the electronic device on the charging and/or power supply point and the interface in the device is the one that directs this, as if it were a plugged-in item.

5. A module according to claim 1 that incorporates a radio receiver element that allows its external control through a remote control or a home automation controller that can incorporate other sensors that allow automation.
